# EUROPEAN PATENT SPECIFICATION

(11) **EP 1 243 532 B1**
(45) Date of publication and mention of the grant of the patent: **30.06.2004**
(21) Application number: 02425026.8
(22) Date of filing: 25.01.2002
(51) Int. Cl.: B65G 49/08, B65G 47/51

(54) **An apparatus for loading and unloading tiles from roller stillages**
Vorrichtung zum Be- und Entladen von Rollenpaletten für Fliesen
Dispositif pour le chargement et le déchargement de tuiles de palettes à rouleaux

(30) Priority: 23.03.2001 IT MO010058
(43) Date of publication of application: 25.09.2002
(73) Proprietor: Kemac S.r.l., 41042 Fiorano Modenese (Modena) (IT)
(72) Inventor: Laroma, Mario, 42013 Casalgrande (Regio Emilia) (IT)
(74) Representative: Gotra, Stefano

(56) References cited:
- EP-A- 0 301 231
- DE-A- 3 423 626
- DE-A- 19 534 953
- FR-A- 2 008 956

## Description

Loaders/unloaders of tiles from roller stillages, operating at ends of tile conveyor lines, are well known in the prior art and essentially comprise: a fixed roller plane, fed by the line, in which rows of tiles (formed on the line) are translated and arranged side-by-side to form layers of tiles; a mobile roller plane having the task of transferring the tiles from the fixed roller plane to the single roller planes of the roller stillage, and vice versa.

Structurally these machines have, associated to the mobile roller plane, a frame bearing one or due horizontal arms which are equipped with organs for interacting with the projecting ends of the rollers forming the roller planes in the stillages, so that the rollers can be controlledly set in motion in order for the stillage roller shelves to be loaded and unloaded.

The arm or arms are therefore mobile vertically, so as to be able to align with the various roller planes, and can be brought right up to the ends of the rollers in order to interact there-with. Geometrically the arms operate at the sides of the stillages, from which the ends of the rollers project, so that an operative space is created internally of which a single stillage is positioned in order to be operated upon by the arm (or arms if the operation is carried out at both sides of the stillage).

These machines are structurally dedicated to loading or unloading one roller plane at a time.

In order to avoid the loading (or unloading) operation having to be stopped during the substitution of the stillage located in the above-mentioned operating space, frequently a two-stillage space is afforded, with the stillages side-by-side, so that when a loading or unloading operation is complete on one stillages, the other can be used immediately, with no work stoppage.

Therefore, during the substitution of one of the roller stillages, while a full stillage is removed and substituted with an empty one, the loading operation continues with no interruptions, using the other stillage.

All of the above process leads to the loading-unloading apparatus taking up considerable floor-space; especially when one considers the amount of shunting-moving space needed to get the boxes into and out of position with the help of AGV automatic vehicles, which are usually employed to do this job. The above considerations reflect on the decision as to where to locate the entire conveyor and work lines of tiles (drying lines, glazing, firing). For example, in the case of lines conveying tiles to glazing machines: these machines are arranged in such a way that the directions for inserting and removing the stillages are perpendicular to the line. This means that between one line and an adjacent line considerable spaces are needed for manoeuvring, inserting and removing the stillages from the loading/unloading apparatus.

In firing lines, the storage stations are usually positioned at the ends of a belt-conveyor line which connects them to the loading/unloading bench of the kiln, depending on whether it is a loading or unloading operation. The connecting line often exhibits a 90° bend for transporting the tiles in a parallel direction to the direction of the kiln. This arrangement too is fairly space-consuming, due to the size of the apparatus itself and the conveyor line necessary, and to the service spaces which are indispensable for enabling removal and depositing of the roller stillages at the machines.

Document FR-A-2008956 discloses an apparatus for loading and unloading objects "materiaux de construction" from roller stillages comprising: a fixed roller plane (table a rouleaux (3)), fed by a conveyor line for the formation of layers of objects (rangées de materiaux (2)), the fixed roller plane being associated to the conveyor line so that the rows of objects can be translated onto the fixed roller plane in a perpendicular or parallel direction to the conveyor line, a plurality of mobile roller planes, positioned one above another, destined to receive layers of objects from the fixed roller plane; the mobile roller planes being predisposed coplanar with the roller shelves in the roller stillages in order to transfer the layers of objects onto the roller shelves; means being provided for controllingly driving the mobile roller planes and the roller shelves.

The main aim of the present invention is to obviate the limits and drawbacks of the prior art by providing a machine for loading and unloading roller stillages which is of contained overall dimensions.

A further aim of the present invention is to realise a loading/unloading apparatus which is structured in such a way that it is not necessary to insert extra storage devices into a line in order to avoid line stoppage.

An advantage of the invention is constituted by its simplicity.

These aims and advantages and others besides are all achieved by the present invention, as it is characterised in the claims that follow.

Further advantages of the present invention will better emerge from the detailed description that follows of a preferred but non-exclusive embodiment of the invention, illustrated purely by way of non-limiting example in the accompanying figures of the drawings, in which:

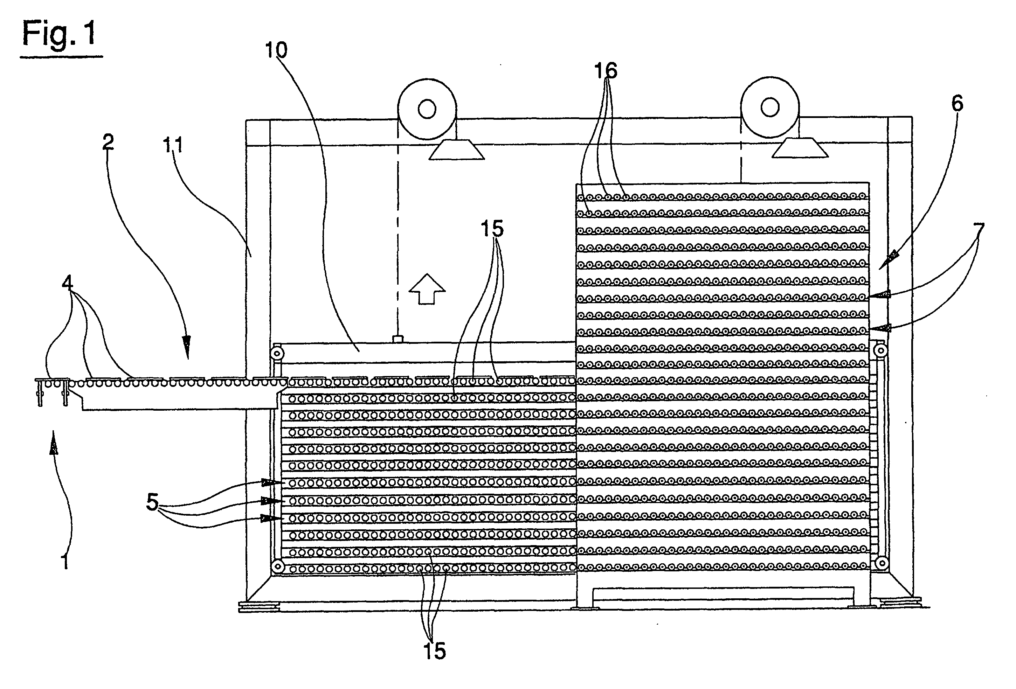

figure 1 is a schematic side view in vertical elevation, sectioned according to line II-II of figure 2;
figure 2 is a schematic plan half-view from above of figure 1;
figure 3 shows the same section represented in figure 1, featuring the apparatus with no roller stillage coupled thereto;

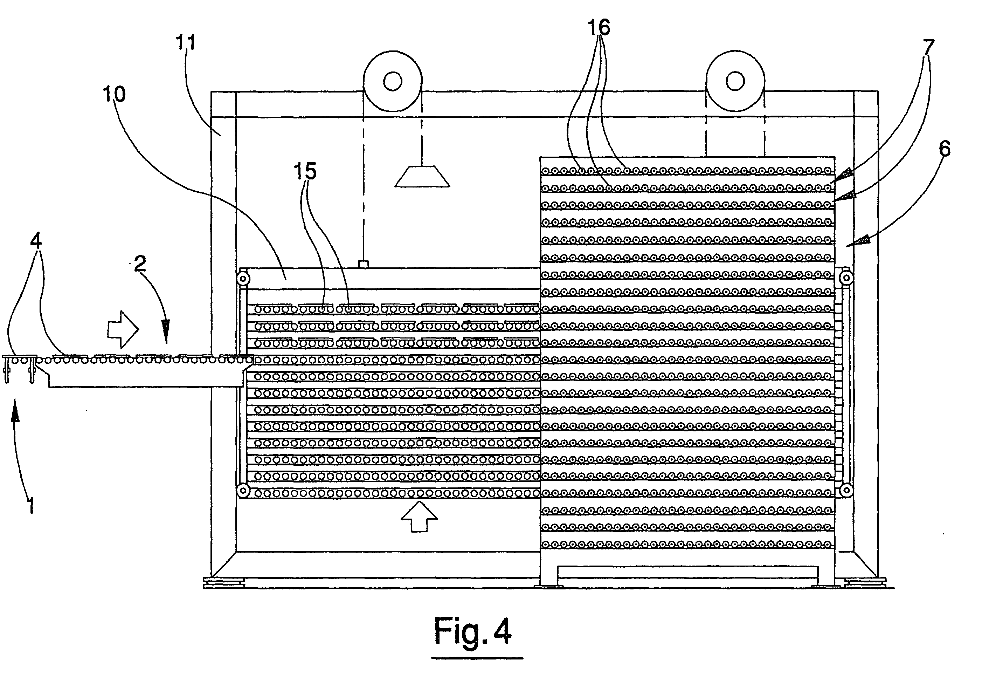

figure 4 is the same view as figure 2 in a different operating configuration corresponding to an intermediate stage in the work cycle.

With reference to the figures of the drawings, 1 denotes a ceramic tile conveyor line 4 feeding an apparatus for loading (or unloading) roller stillages 6 which are of known type and are constituted by a plurality of roller shelves 7 stacked one above another.

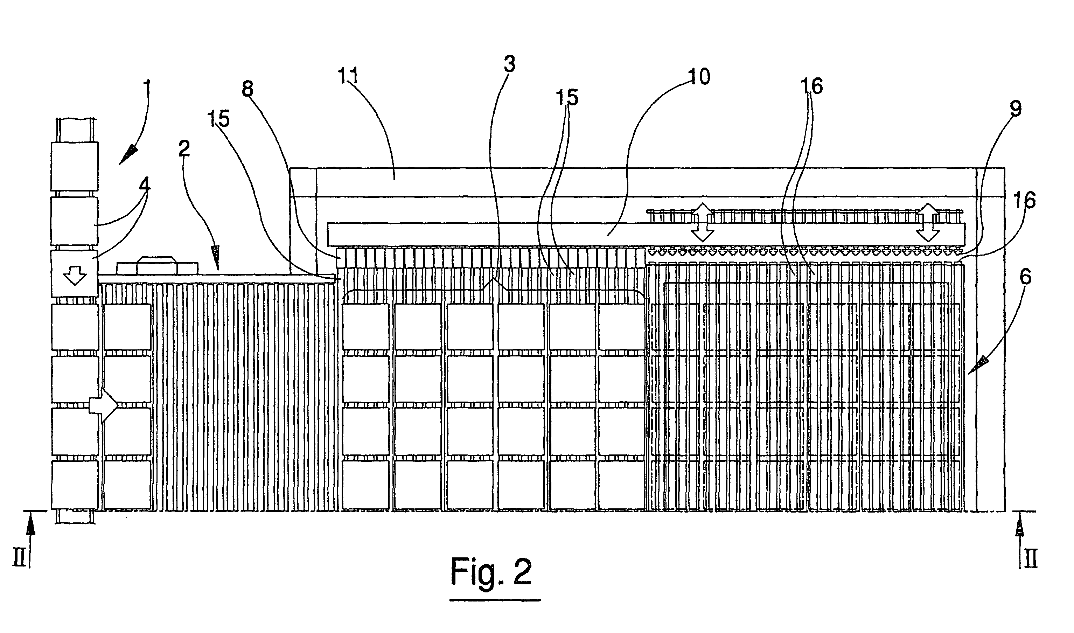

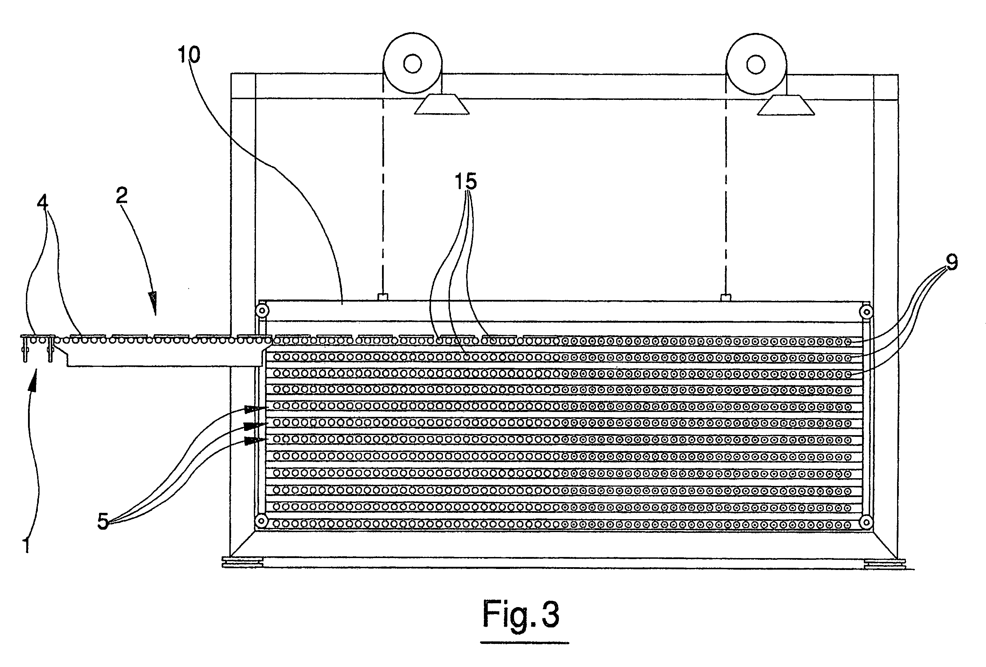

The apparatus for loading (or unloading) the tiles, a section of which according to line II-II of figure 2 is completely visible in figure 3, in which no roller plane 6 is inserted, comprises a fixed roller plane 2, fed directly by the conveyor line 1, for the formation of layers 3 of tiles, which roller plane 2 is associated to the conveyor line 1 so that rows of tiles 4, formed on the line, are translated onto the roller plane in a perpendicular direction to the rows themselves and to the line 1. A plurality of roller planes 5, one above another, singly receive layers 3 of tiles 4 from the fixed roller 2 on which they have been previously formed by use of usual techniques.

The mobile roller planes 5 are supported by a frame 10 and are predisposed to be couplable or positionable coplanarly with the roller shelves 7 of the stillages 6 to transfer the layers 3 stocked thereon onto the roller shelves 7.

The coupling or coplanar positioning of the roller planes 5 to a corresponding number of roller shelves 7 is realised very simply by vertically displacing the roller planes 5 themselves. To do this, the frame 10 supporting the roller planes 5 is made to perform appropriate vertical translations along the uprights 11. The vertical displacements of the roller planes 5 are stepped, one step corresponding to the distance between a roller plane 5 and an immediately above or below roller plane 5.

The roller planes 5 are vertically reciprocally equidistanced, exactly the same as are the roller shelves 7 in the stillage 6. Thus, when the stillage 6 is located in the correct operative position with respect to the apparatus, the mobile roller planes 5 can be positioned so as to afford rest planes for the coplanar tiles, consecutive to the planes constituted by the roller shelves 7.

The mobile roller planes 5 are motorised in order to enact the translation of the layers 3 of tiles 4.

A special motor on command drives the rollers 15 making up the roller planes 5. In particular, the motor comprises first pluralities of drive organs 8 of the rollers, organised in horizontal lines to transmit motion to the rollers 15 of the single roller planes 5. Each mobile roller plane 5 is provided with a first plurality of drive organs 8 organised in a horizontal line. This enables each roller plane 5 to move a layer of tiles 4.

Similar motor means are provided to drive, on command, the rollers of the roller shelves 7 of the stillage 6. The motor comprises second pluralities of drive organs 9 of the rollers, organised in horizontal lines which interact on command with the ends of the rollers 16 making up the single roller shelves 7 of the stillage 6.

In particular, a second plurality of drive organs 9 corresponds to each mobile roller plane 5 (provided with drive organs 8 for the rollers organised in a horizontal row). The second plurality of drive organs 9 is arranged so as to enable interaction, on command, with ends of the rollers 16 making up a single roller shelf 7 of the stillage 6, which is aligned or co-planar with the mobile roller plane 5.

Preferably the number of the stacked mobile roller planes 5 is equal to a half or is a denominator of the number of roller shelves 7 of a single stillage 6.

In the illustrated embodiment the number of mobile roller planes 5 is half the number of the roller shelves 7 in a single stillage 6.

There follows a description of how the stillage 6 is loaded.

Single layers 3 of tiles 4 are formed on the fixed roller plane 2 which, once completed, are translated onto the single mobile roller planes 5. For this purpose the entire stack of roller planes 5 is positioned vertically so that one of the mobile roller planes 5 coplanarly faces the fixed roller plane 2 in order for the translation of the layer 3 of tiles 4 to take place.

The translation operation is very fast and once done the stack of mobile roller planes 5 is raised by one step so that the immediately underlying roller plane 5 is aligned with the fixed roller plane 2, ready for a translation of a fresh layer 3 of tiles 4, just formed on the fixed roller plane 2.

This cycle is repeated until the top roller plane 5 in the stack is at the same level as the top roller shelf 7 in the stillage 6.

As soon as they are aligned, the drive organs 8 of all the roller planes 5 (except the bottom-most one) and the drive organs 9 of the corresponding roller shelves 7 are activated. The drive organs 9 turn the rollers of the roller shelves 7 and the shelves 7 therefore can receive the layers 3 of tiles 4.

The translation happens with no dead working times, as the loading operation can continue, thanks to the fact that the bottom-most mobile roller plane 5 is aligned with the fixed roller 2.

A new mobile roller 5 filling cycle begins, with the stack gradually descending until the mobile roller plane 5 at the bottom of the stack is aligned with the bottom roller shelf 7 in the stillage 6.

As soon as alignment has been reached, the drive organs 8 of all the roller planes 5 are activated (except possibly the topmost one), as are the corresponding drive organs 9, which interact with the ends of the rollers 16 and impart thereon the drive necessary for contemporaneously translating the layers 3 of tiles 4 from the roller planes 5 to the roller shelves 7 of the stillage 6.

Once the roller stillage 6 has been loaded it can be removed and replaced with an empty stillage 6, while the loading operation of the mobile roller planes 5 continues autonomously with a gradual cyclic raising of the stack up until the highest position has been reached, at which the topmost mobile roller plane 5 (loaded) is aligned and coplanar with the roller shelf 7 located at the top of the roller stillage 6. The time allowed, therefore, for the removal of a full stillage 6 and replacement with an empty one, is more or less equal to half a cycle, where time and cycle mean the time between the removal from the machine of a loaded stillage and its replacement with an empty stillage ready for loading. The apparatus can also be used as an unloading machine, in which case the movement of the layers 3 of tiles 4 happens in an opposite order from what has been described for the loading operation.

## Claims

1. An apparatus for loading and unloading tiles from roller stillages (6), comprising: a fixed roller plane (2), fed by a conveyor line, for the formation of layers (3) of tiles (4), the fixed roller plane (2) being associated to the conveyor line (2) so that rows of tiles (4), formed on the conveyor line, can be translated onto the fixed roller plane (2) in a perpendicular or parallel direction to the conveyor line; said apparatus further comprises a plurality of mobile roller planes (5), positioned one above another, destined to receive layers (3) of tiles (4) from the fixed roller plane (2); the mobile roller planes (5) being predisposed to couple coplanarly with roller shelves (7) in the roller stillages (6) in order to transfer the layers (3) of tiles (4) onto the roller shelves (7); means being provided for controllingly driving the mobile roller planes (5) and the roller shelves (7), **characterized in that**
the means for controllingly driving the mobile roller planes (5) and the roller shelves (7) comprises first pluralities of drive organs (8) organised in horizontal lines for transmitting drive to the rollers (15) of the mobile roller planes (5) and second pluralities of drive organs (9) organised in horizontal lines which are predisposed controllably to interact with the ends of the rollers (16) making up single shelves of the roller shelves (7); each of the mobile roller planes (5) being provided with a first plurality of drive organs (8); each of the mobile roller planes (5) being associated with at least one of the second plurality of drive organs (9) able on command to interact with the ends of the rollers (16) making up a single shelf of the roller shelves (7) in the stillage (6), said single shelf is coplanar with a mobile roller plane of the mobile roller planes (5).

2. The apparatus of claim 1, **characterised in that** the mobile roller planes (5), arranged one above another, are equidistanced one from another in a vertical direction, identically to the shelves of the roller shelves (7) in the stillage (6); a number of the mobile roller planes (5) being at least a half of a number of the roller shelves (7) in a stillage (6).

3. The apparatus of claim 2, **characterised in that** a number of the mobile roller planes (5) is equal to a half of a number of shelves of the roller shelves (7) of a stillage (6), or is a denominator of a half thereof

4. The apparatus of claim 2, **characterised in that** a number of the mobile rollers in a mobile roller plane (5) is equal to a denominator of a number of roller shelves (7) of a stillage (6).

5. The apparatus of claim 2, **characterised in that** a number of the mobile roller planes (5) is equal to a half plus one of a number of roller shelves (7) in a stillage (6).

## Patentansprüche

1. Vorrichtung zum Be- und Entladen von Rollenpaletten (6), enthaltend: einen durch eine Förderbahn gespeisten feststehenden Rollengang (2) zum Bilden von Lagen (3) von Fliesen (4), wobei der feststehende Rollengang (2) der Förderbahn (2) so zugeordnet ist, dass auf der Förderbahn geformte Reihen von Fliesen (4) in einer lotrechten oder parallelen Richtung zu der Förderbahn auf den feststehenden Rollengang (2) übertragen werden können; wobei die genannte Vorrichtung weiter eine Anzahl von beweglichen Rollengängen (5) enthält, angeordnet einer über dem anderen und dazu bestimmt, Lagen (3) von Fliesen (4) von dem feststehenden Rollengang (2) zu übernehmen; wobei die beweglichen Rollengänge (5) dazu vorgesehen sind, sich koplanar mit Rollenflächen (7) in den Rollenpaletten (6) zu verbinden, um die Lagen (3) von Fliesen (4) auf die Rollenflächen (7) zu transferieren; wobei Mittel für den steuerbaren Antrieb der beweglichen Rollengänge (5) und der Rollenflächen (7) vorgesehen sind, **dadurch gekennzeichnet, dass** die Mittel für den steuerbaren Antrieb der beweglichen Rollengänge (5) und der Rollenflächen (7) eine erste Anzahl von Antriebselementen (8) enthalten, angeordnet in horizontalen Reihen, um den Antrieb auf die Rollen (15) der beweglichen Rollengänge (5) zu übertragen, und eine zweite Anzahl von Antriebselementen (9), angeordnet in horizontalen Reihen und dazu vorgesehen, steuerbar mit den Enden der Rollen (16) zusammenzuwirken, aus denen die einzelnen Rollenflächen (7) gebildet sind; wobei jedem der beweglichen Rollengänge (5) wenigstens eins der zweiten Anzahl von Antriebselementen (9) zugeordnet ist, in der Lage, auf einen Befehl hin mit den Enden der Rollen (16), die eine einzelne Rollenfläche (7) in der Rollenpalette (6) bilden, zusammenzuwirken, wobei die genannte einzelne Rollenfläche koplanar mit einem beweglichen Rollengang der beweglichen Rollengänge (5) ist.

2. Vorrichtung nach Patentanspruch 1, **dadurch gekennzeichnet, dass** die genannten, einer über dem anderen angeordneten beweglichen Rollengänge (5) in einer vertikalen Richtung den gleichen Abstand voneinander haben wie die Flächen der Rollenflächen (7) in der Rollenpalette (6); wobei eine Anzahl der beweglichen Rollengänge (5) wenigstens die Hälfte einer Anzahl von Rollenflächen (7) in der Rollenpalette (6) beträgt.

3. Vorrichtung nach Patentanspruch 2, **dadurch gekennzeichnet, dass** eine Anzahl der beweglichen Rollengänge (5) gleich der Hälfte einer Anzahl von Flächen der Rollenflächen (7) einer Rollenpalette (6) oder ein Teiler der Hälfte derselben ist.

4. Vorrichtung nach Patentanspruch 2, **dadurch gekennzeichnet, dass** eine Anzahl der beweglichen Rollen in einem beweglichen Rollengang (5) einem Teiler von einer Anzahl der Rollenflächen (7) in einer Rollenpalette (6) entspricht.

5. Vorrichtung nach Patentanspruch 2, **dadurch gekennzeichnet, dass** eine Anzahl der beweglichen Rollengänge (5) einer Hälfte plus einer von einer Anzahl von Rollenflächen (7) in einer Rollenpalette (6) entspricht.

## Revendications

1. Dispositif pour le chargement et le déchargement de tuiles de palettes à rouleaux (6), comprenant: un plan à rouleaux fixe (2), alimenté par une ligne de convoyage, pour la formation de couches (3) de tuiles (4), le plan à rouleaux fixe (2) étant associé à la ligne de convoyage (2) de manière à ce que des files de tuiles (4), formées sur la ligne de convoyage, puissent être translatées sur le plan à rouleaux fixe (2) dans une direction perpendiculaire ou parallèle à la ligne de convoyage; ledit dispositif comprend en outre une pluralité de plans à rouleaux mobiles (5), positionnés l'un au-dessus de l'autre, destinés à recevoir des couches (3) de tuiles (4) provenant du plan à rouleaux fixe (2); les plans à rouleaux mobiles (5) étant prédisposés pour s'accoupler de manière coplanaire avec des plans à rouleaux (7) dans les palettes à rouleaux (6) de manière à transférer les couches (3) de tuiles (4) sur les plans à rouleaux (7); des moyens étant prévus pour actionner sur commande les plans à rouleaux mobiles (5) et les plans à rouleaux (7),
**caractérisé en ce que** les moyens pour actionner sur commande les plans à rouleaux mobiles (5) et les plans à rouleaux (7) comprennent une première pluralité d'organes de mise en mouvement (8), organisés en lignes horizontales pour transmettre le mouvement aux rouleaux (15) des plans à rouleaux mobiles (5), et une seconde pluralité d'organes de mise en mouvement (9), organisés en lignes horizontales, prédisposés pour interagir sur commande avec les extrémités des rouleaux (16) qui composent les différents plans des plans à rouleaux (7); chacun des plans à rouleaux mobiles (5) étant pourvu d'une première pluralité d'organes de mise en mouvement (8); chacun des plans à rouleaux mobiles (5) étant associé à au moins l'un de la seconde pluralité d'organes de mise en mouvement (9) pouvant interagir sur commande avec les extrémités des rouleaux (16) composant un plan des plans à rouleaux (7) dans la palette (6), ledit plan étant coplanaire à un plan à rouleaux mobile des plans à rouleaux mobiles (5).

2. Dispositif selon la revendication 1, **caractérisé en ce que** les plans à rouleaux mobiles (5), disposés l'un sur l'autre, sont équidistants entre eux en direction verticale, de manière identique aux plans des plans à rouleaux (7) dans la palette (6); un nombre de plans à rouleaux mobiles (5) étant au moins la moitié du nombre de plans à rouleaux (7) dans une palette (6).

3. Dispositif selon la revendication 2, **caractérisé en ce qu'**un nombre de plans à rouleaux mobiles (5) est égal à la moitié du nombre de plans des plans à rouleaux (7) d'une palette (6), ou à un sous-multiple de la moitié.

4. Dispositif selon la revendication 2, **caractérisé en ce qu'**un nombre de rouleaux mobiles dans un plan à rouleaux mobile (5) est égal à un sous-multiple d'un nombre de plans à rouleaux (7) d'une palette (6).

5. Dispositif selon la revendication 2, **caractérisé en ce qu'**un nombre de plans à rouleaux mobiles (5) est égal à la moitié plus un d'un nombre de plans à rouleaux (7) dans une palette (6).
